# EUROPÄISCHE PATENTSCHRIFT

(11) **EP 1 459 055 B1**
(45) Veröffentlichungstag und Bekanntmachung des Hinweises auf die Patenterteilung: **26.10.2005**
(21) Anmeldenummer: 02795004.7
(22) Anmeldetag: 18.12.2002
(51) Int. Cl.: G01N 22/00, G01F 1/74

(54) **MIKROWELLEN-MESSEINRICHTUNG ZUR BESTIMMUNG DER BELADUNG EINER ZWEIPHASENSTRÖMUNG**
MICROWAVE MEASURING DEVICE FOR DETECTING THE CHARGE OF A TWO-PHASE FLOW
DISPOSITIF DE MESURE EN HYPERFREQUENCES POUR LA DETERMINATION DE LA CHARGE D'UN ECOULEMENT DIPHASE

(30) Priorität: 24.12.2001 DE 10164107
(43) Veröffentlichungstag der Anmeldung: 22.09.2004
(73) Patentinhaber: Promecon Prozess- Und Messtechnik Conrads GmbH, 39179 Barleben (DE)
(72) Erfinder: CONRADS, Hans, Georg, 30177 Hannover (DE); KLUPSCH, Volkhard, 39179 Barleben (DE); HALM, Alexander, 39291 Hohenwarthe (DE)
(74) Vertreter: Heyner, Klaus
(86) Internationale Anmeldenummer: PCT/DE2002/004593
(87) Internationale Veröffentlichungsnummer: WO 2003/056316

(56) Entgegenhaltungen:
- WO-A-01/36951
- DE-A- 19 728 612
- DE-U- 29 902 592
- US-A- 5 101 163
- US-A- 5 351 521

## Beschreibung

Die Erfindung betrifft eine Mikrowellen-Messeinrichtung zur Bestimmung der Beladung einer Zweiphasenströmung mit gasförmigem fragermedium mit kleinen und kleinsten Feststoff- und/oder Flüssigkeitspartikeln sowie zur Bestimmung des in einer Flüssigkeitsströmung enthaltenen Gases. Ein bevorzugtes Anwendungsgebiet der Erfindung ist die Bestimmung der Beladung eines Gasstromes mit Feststoffpartikeln in großvolumigen pneumatischen Feststofftransportsystemen, wie sie beispielsweise bei Kohlestaubfeuerungsanlagen in Kohlekraftwerken Anwendung finden.

Es ist bekannt, die Partikelbeladungvon Zweiphasenströmungen mit gasförmigem Trägermedium sowie den in Flüssigkeitsströmen enthaltenen Gasanteil mittels Mikrowellen zu bestimmen. Dazu werden bei einem erheblichen Teil der bekannten Lösungen Mikrowellen einer bestimmten Frequenz in einen als Messstrecke präparierten Förderleitungsabschnitt eingekoppelt und am Ende der Messstrecke die Veränderung der Mikrowelle in Amplitude und Phase registriert. Bevorzugt wird hierbei mit der Hohlleiter-Grundwelle gearbeitet, um die Auswertung nicht unnötig zu verkomplizieren bzw Störungen zu vermeiden.

Der physikalische Hintergrund des Messprinzips ist die Tatsache, dass eine Änderung der Beladung des Trägergases mit Feststoff und/oder Flüssigkeit bzw eine Änderung des Gasanteils in einem Flüssigkeitsstrom zur Veränderung der komplexen Dielektrizitätskonstante innerhalb der Förderleitung führt und Mikrowellen in Abhängigkeit von dieser Dielektrizitätskonstante eine Dämpfung und Phasenverschiebung erfahren. So wird in der DE 44 26 280 A1 eine Lösung zur Ermittlung der Beladung eines Gasstromes mit Feststoffteilchen, Insbesondere zur Regelung der Feuerung eines Kessels mit Kohlenstaub in einem Kohlekraftwerk, beschrieben, bei der aus der Dämpfungvon elektromagnetischen Wellen entlang einer den beladenen Gasstrom führenden Messstrecke auf die Feststoffbeladung des Gasstromes geschlossen wird. In analoger Weise wird, wie in der DE 33 17 215 C1 beschrieben, anhand der Dämpfungvon Mikrowellen beim Durchgang durch partikelbeladenes Abgas auf die Menge der Partikelbeladung des Abgases geschlossen. In der WO 91/05243 wird eine Lösung beschrieben, bei der durch Auswertung von Dämpfung und Phasenverschiebung von Mikrowellen entlang einer Messstrecke der Gehalt an Öl bzw. Wasser eines Öl-Wasser-Gemisches sowie dessen Geschwindigkeit bestimmt wird.

Die vorstehend beschriebenen Lösungen sind aufgrund von Störeinflüssen durch reflektierte Mikrowellen bzw. infolge geometrischer Veränderungen des Förderleitungssystems mit erheblichen Problemen behaftet. Insbesondere bei kleinen Beladungen ist die Mikrowellendämpfung so gering, dass Mikrowellen im Förderleitungssystem wie in einem Hohlleiter über weite Strecken geleitet und an Einengungen, Verzweigungen, Krümmungen oder Enden reflektiert und/oder gebeugt werden. Es kommt zur Überlagerung von hin- und rücklaufenden Wellen und damit zu kaum auswertbaren Messergebnissen bzw. bei Auswertung zu erheblichen Verfälschungen.

Zur Vermeidung derartiger Störeinflüsse wurden Lösungen, bei denen geometrisch bestimmte Mikrowellenresonatoren Anwendung finden, entwickelt. So wird Beispielsweise in der EP 0 669 522 A2 eine entsprechende Einrichtung beschrieben, mittels derer ein Pulver-Massenstrom in einem Pulver-Gas-Gemisch während der Förderung durch eine Förderleitung gemessen wird. Der Mikrowellenresonator ist bei dieser Lösung von außen an die Förderleitung angebracht bzw umgibt die Förderleitung als Hohlraumresonator. Im Falle des von außen an die Förderleitung angebrachten Hohlraumresonators erfolgt die Messung lediglich in einem Teilstrom des Pulver-Gas-Gemisches. Wenn, wie bei großvolumigen Förderleitungen meist anzutreffen, über den Querschnitt der Förderleitung unterschiedliche Partikelbeladungen des Pulver-Gas-Gemisches auftreten, teilweise auch mit Strähnen erhöhter Partikelkonzentration gerechnet werden muß, können die mittels eines von außen an die Förderleitung angebrachten Hohlraumresonators erzielten Messergebnisse stark fehlerbehaftet sein. Bei einem die Förderleitung umschließenden Hohlraumresonator werden derartige Messfehler ausgeschlossen. Allerdings sind entsprechende Resonatoren mit erheblichem baulichem Aufwand, der auch einen Eingriff in die Messleitung selbst einschließen kann, verbunden und bei großvolumigen Förderleitungen in der Praxis meist schon aus Platzgründen nicht realisierbar. Die beschriebene Lösung ist deshalb auch auf Anwendungsgebiete, bei denen nur vergleichsweise geringe Föderquerschnitte auftreten, wie beispielsweise bei Pulverbeschichtungsgeräten, beschränkt.

Als Weiterentwicklung der in der EP 0 669 522 A2 beschriebenen Lösung wird in der DE 196 50 112 C1 ein Mikrowellenresonator beschrieben, der sich durch einen vergleichsweise geringen baulichen Aufwand auszeichnet. Der Resonator besteht im Prinzip aus einer einen nichtleitenden Förderleitungsabschnitt umschließenden zylindrischen Spule, die nach außen durch einen elektrisch leitfähigen Zylinder abgeschirmt ist (Helixresonator). Die Spule wird durch eine hochfrequente Wechselspannung (im Mikrowellenbereich) zur Resonanz gebracht. Durch Auswertung der Verschiebung der Resonanzfrequenz in bekannter Weise wird der Pulvermassenstrom bestimmt. Auch diese Lösung ist für großvolumige Förderleitungen, die in aller Regel aus einem elektrisch leitfähigen Material (Metall) bestehen, nicht anwendbar oder mit erheblichem baulichen Aufwand verbunden, weil ein Abschnitt der Förderleitung aus nichtleitendem Material ausgeführtwerden muß und bei den entsprechenden Baugrößen und der damit verbundenen geringeren Resonanzfrequenz auch der aus Spule und elektrisch leitfähiger Abschirmung bestehende Helixresonator eine erhebliche Baugröße aufweist.

Zur Bestimmung der Anteile von in Transportrohrleitungen geförderten Gas-Öl-Wasser-Gesmischen wird in der US 5,351,521 A eine Lösung beschrieben, die es ermöglicht, große Änderungen der komplexen Dielektrizitätskonstante zu messen. Dazu werden innerhalb der Transportrohrleitung gestuft hintereinander ineinander übergehend Rohrabschnitte mit sich verringerndem Durchmesser angeordnet. In den Rohrabschnitten sind Messelektroden angeordnet, mittels denen entsprechend des sich verringernden Durchmessers der Rohrabschnitte unterschiedliche Grenzfrequenzen und damit unterschiedliche Frequenzbereiche der eingekoppelten Mikrowelle messtechnisch ausgewertet werden können. Die Rohrabschnitte werden durch elektrisch leitfähige Stäbe gehalten, die strahlenförmig von der äußeren Wand jedes Rohrabschnittes zur inneren Wandung der Transportrohrleitung verlaufen. Durch die beschriebene Anordnung der elektrisch leitfähigen Stäbe wird erreicht, dass die eingekoppelten Mikrowellen den Raum zwischen der inneren Wandung der Transportrohrleitung und der äußeren Wandung der Rorabschnitte nicht passieren können. Die Lösung zeichnet sich durch einen verglichsweise großen Meßbereich aus. Die erreichbare Meßgenauigkeit ist aber für das bevorzugte Anwendungsgebiet der Bestimmung der Beladung eines Gasstromes mit Feststoffpartikeln in großvolumigen pneumatischen Feststofftransportsystemen, wie sie beispielsweise bei Kohlestaubfeuerungsanlagen in Kohlekraftwerken Anwendung finden, nicht ausreichend. Hinzu kommt, dass die notwendigen Einbauten der Rohrabschnitte in die Transportrohrleitung aufwendig sind und die Strömungsverhältnisse innerhalb der Transportrohrleitung erheblich beeinflussen.

Ziel der Erfindung ist es, eine Mikrowellen-Messeinrichtung zur Bestimmung der Beladung einer Zweiphasenströmung mit gasförmigem Trägermedium mit kleinen und kleinsten Feststoff- und/oder Flüssigkeitspartikeln sowie zur Bestimmung des in einer Flüssigkeitsströmung enthaltenen Gases zu schaffen, die bei hoher Messgenauigkeit kostengünstig zu realisieren ist, ein breites Anwendungsgebiet besitzt und Insbesondere auch für eine Anwendung in großvolumigen Förderleitungen bei geringen Beladungen bzw geringen Beladungsunterschieden geeignet ist. Dazu besteht die Aufgabe, eine Mikrowellen-Messeinrichtung zu entwickeln, die einen vergleichsweise einfachen Aufbau aufweist, einfach in bestehende Förderleitungen oder Förderleitungssysteme integrierbar ist und mit der stets der gesamte Strömungsquerschnitt der Förderleitung in die Messung einbezogen wird.

Diese Aufgabe wird erfindungsgemäß für eine Mikrowellen-Messeinrichtung zur Bestimmung der Beladung einer Zweiphasenströmung mit gasförmigem Trägermedium mit kleinen und kleinsten Feststoff und/oder Flüssigkeitspartikeln sowie zur Bestimmung des in einer Flüssigkeitsströmung enthaltenen Gases dadurch gelöst, dass in einen aus elektrisch leitfähigem Material bestehenden Förderleitungsabschnitt in dessen Längsrichtung vor und nach der Messstrecke, die in bekannter Weise von einer Sendeantenne zur Einkopplung von Mikrowellen in die Förderleitung und einer Empfangsantenne zum Empfang von in Frequenz, Amplitude und/oder Phase entlang der Messstrecke veränderten Mikrowellen gebildet wird, je ein elektrisch leitfähiger Stab (nachfolgend Feldstab genannt) so eingebracht wird, dass der durch die Feldstäbe eingegrenzte Förderleitungsabschnitt in Verbindung mit den Feldstäben für eingekoppelte Mikrowellen als Resonator wirkt. DerAbstand der Feldstäbe und damit der durch die Feldstäbe eingegrenzte Föderleitungsabschnitt bestimmt die Resonanzfrequenz des Resonators.

Die Feldstäbe sind annähernd in der Polarisationsebene der eingekoppelten Mikrowellen liegend und annähernd innerhalb der jeweiligen Querschnittsfläche des elektrisch leitfähigen Förderleitungsabschnittes liegend entweder gleich oder entgegengesetzt gerichtet anzuordnen. Sie sollten dabei so angeordnet sein, dass sie annähernd radial zum Mittelpunk der Querschnittsfläche weisen bzw diesen kreuzen. In ihrer Länge sind die Feldstäbe so zu bemessen, dass sie mindestens bis zum Mittelpunkt der Querschnittsfläche reichen, günstigerweise die Querschnittsfläche zu mehr als 2/3 durchspannen.

Es ist für die Funktion der Erfindung nicht notwendig, dass der in Verbindung mit den Feldstäben als Mikrowellenresonator wirkende Förderleitungsabschnitt einen kreisförmigen Querschnitt aufweist. Die Querschnittsfläche des Förderleitungsabschnittes kann ebensogut oval, quadratisch, rechteckig oder vieleckig sein. Unter der Bezeichnung mittlerer Durchmesser soll hier vielmehr der gemittelte Abstand zweier gegenüberliegenderWandflächenelemente der Förderleitung verstanden werden.

Bevorzugt in Bezug auf die Eindeutigkeit der Messergebnisse sowie die erreichbare Messgenauigkeit sollten die eingekoppelten Mikrowellen in ihrer Frequenz der Hohlleiter-Grundwelle entsprechen.

Ausgehend von der bevorzugten Verwendung der Hohlleiter-Grundwelle zur Bestimmung der Veränderung der Dielektrizitätskonstante und damit zur Ermittlung der Beladung sollte die zwischen Sende- und Empfangsantenne liegende Messstrecke in ihrer Länge so bemessen sein, dass sie dem 0,8 bis 3 fächen, bevorzugt dem 1,5 fachen des mittleren Durchmessers des Förderleitungsabschnittes entspricht. Die Feldstäbe sind dann in Längsrichtung der Förderleitung jeweils in einem annähernd dem mittleren Durchmesser des Förderleitungsabschnittes entsprechenden Abstand vor der Sende- und nach der Empfangsantenne, fluchtend zu diesen, anzuordnen. Das aus Feldstäben und elektrisch leitfähigem Förderleitungsabschnitt gebildete elektrische System wirkt dann für die Hohlleiter-Grundwelle als Resonator.

Durch Reflexion, Beugung und Überlagerung außerhalb der Messstrecke, innerhalb der Förderleitung in ihrer Polarisationsebene und/oder Phasenlage veränderte Mikrowellen, die Verfälschungen der Messergebnisse bewirken können, werden durch die Feldstäbe weitgehend kurzgeschlossen.

Ausgenommen von dieser Wirkung der Feldstäbe sind Mikrowellen, deren elektrische Feldstärke am Ort der Feldstäbe null ist. Um zu verhindern, dass diese Mikrowellen in den für eingekoppelte Mikrowellen als Resonator wirkenden, die Messstrecke enthaltenden Abschnitt der Förderleitung eindringen und Verfälschungen der Messergebnisse bewirken, ist es zweckmäßig, vor und nach dem durch die Feldstäbe eingegrenzten Förderleitungsabschnitt Hilfisfeldstäbe anzuordnen. Die Hilfsfeldstäbe sind gleich oder entgegengestzt gerichtet zu den Feldstäben, d. h. ebenfalls in der Polarisationsebene der eingekoppelten Mikrowellen liegend, anzuordnen. Ihr Abstand zu den Feldstäben und damit zum durch Feldstäbe und Förderleitungsabschnitt gebildeten elektrischen Resonatorfür eingekoppelte Mikrowellen ist so zu bemessen, dass Mikrowellen, deren elektrische Feldstärke am Ort der Feldstäbe null ist, außerhalb des Resonators kurzgeschlossen werden. Zweckmäßig ist daher ein Abstand, der ca. 1/8 der Wellenlänge der Resonanzfrequenz des Resonators entspricht, weil damit Mikrowellen mit der 2 bzw 3fachen Frequenz der Resonanzfrequenz des Resonators weitgehend kurzgeschlossen werden. Die Länge der Hilfsfeldstäbe sollte der der Feldstäbe entsprechen.

Bei bevorzugter Verwendung der Hohlleiter-Grundwelle zur Bestimmung der Beladung sollten die Hilfsfeldstäbe in einem Abstand von ca. 7/8 des mittleren Durchmessers des Förderleitungsabschnittes zu den Feldstäben angeordnet sein.

Weiterhin ist es günstig, insbesondere bei symmetrischen Querschnitten der Förderleitung (Kreis, Quadrat, Sechseck), einen um ca. 90° innerhalb der Querschnittsfläche gegenüber den Feldstäben und damit der Polarisationsebene der eingekoppelten Mikrowellen verdrehten Hilfsfeldstab etwa mittig innerhalb der Messstrecke anzuordnen. Dadurch werden die Hohlleitereigenschaften der Messstrecke senkrecht zur Polarisationsebene der eingekoppelten Mikrowellen gezielt so verändert, dass bei in der Polarisationsebene um 90° gegenüber den eingekoppelten Mikrowellen verdrehten Mikrowellen im Bereich der Resonanzfrequenz des Resonators keine Resonanzeffekte auftreten.

Es ist für die Funktion der Erfindung nicht notwendig, dass der Förderleitungsabschnitt bezüglich seiner Längsachse gerade verläuft. Die Funktion der erfindungsgemäßen Mikrowellen-Messeinrichtung ist auch gegeben, wenn der Förderleitungsabschnitt bezüglich seiner Längsachse Bögen oder Krümmungen aufweist.

Denkbar ist es auch, und dies gehört mit zur Erfindung, dass insbesondere bei sehr großen Förderleitungsquerschnitten mehrere innerhalb der jeweiligen Querschnittsfläche liegende Feldstäbe, ggf auch gitterförmig zueinander liegend, angeordnet sind. Bei der Anordnung mehrerer Feldstäbe innerhalb einer Querschnittsfläche ist es nicht notwendig, dass diese radial zum Mittelpunkt der Querschnittsfläche weisen bzw. den Mittelpunkt kreuzen. Die Feldstäbe sollte aber auch in diesem Fall annähernd in der Polarisationsebene der eingekoppelten Mikrowellen liegen.

Ein besonderer Vorteil der erfindungsgemäßen Messeinrichtung besteht in Ihrem vergleichsweise einfachen und damit kostengünstigen Aufbau, der es ermöglicht, die Messeinrichtung an nahezu bliebige Größen von Föderleitungen anzupassen. Außerdem ist die erfindungsgemäße Messeinrichtung auch bei komplizierten Raumverhältnissen problemlos in bestehende Föderleitungssysteme zu integrieren. Die mit der erfindungsgemäßen Messeinrichtung bei Anwendung konventioneller Mikrowellen-Messverfahren erzielten Messergebnisse sind von, auch für den Anmelder, überraschend hoher Präzision.

Die erfindungsgemäße Mikrowellen-Messeinrichtung soll nachfolgend anhand eines Ausführungsbeispieles näher erläutert werden. Die zugehörige Zeichnung zeigt schematisch einen Abschnitt einer Förderleitung mit einer erfindungsgemäßen Mikrowellen-Messeinrichtung.

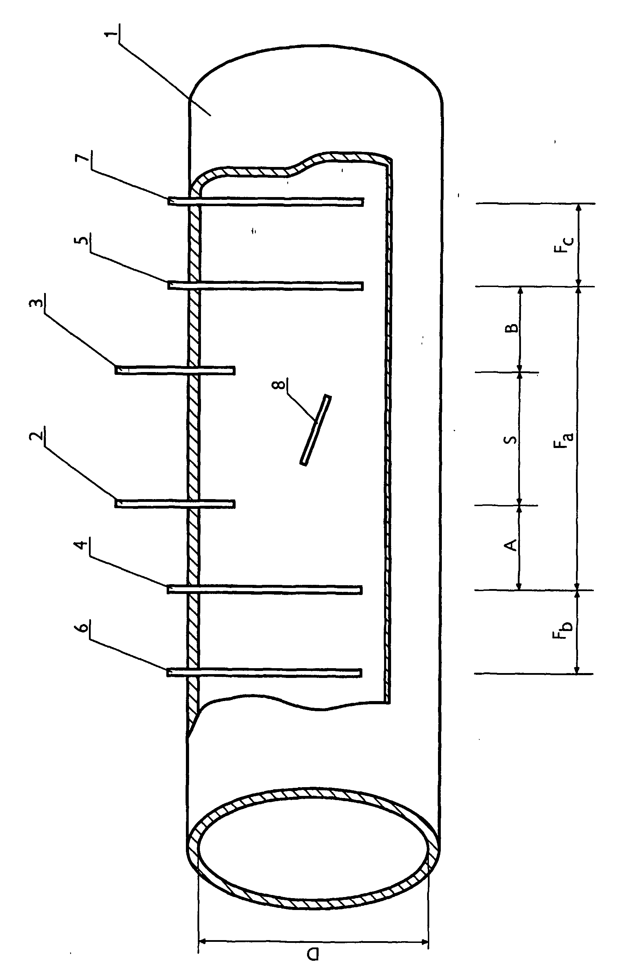

In der Zeichnung ist ein Abschnitt einer Förderleitung 1 zum pneumatischen Transport von Kohlenstaub, wie sie in Kohlenstaubfeuerungsanlagen von Kohlekraftwerken angewendet werden, im Teilschnitt dargestellt Die Förderleitung 1 besteht aus korosionsbeständigem Stahl. Sie besitzt eine annähernd runde Querschnittsfläche mit einem Durchmesser D - 200 mm. Von außen, in das Innere der Förderleitung 1 ragend, sind in Längsrichtung der Förderleitung 1 hintereinander in einem Abstand von 300 mm, eine Messstrecke S bildend, eine Sendeantenne 2 und eine Empfangsantenne 3 angebracht. Über die Sendeantenne 2 werden Mikrowellen mit Frequenzen zwischen 840 und 860 MHz eingekoppelt. Diese Mikrowellen entsprechen der Hohlleiter-Grundwelle der Förderleitung 1. In Längsrichtung der Förderleitung 1 vor der Sendeantenne 2 bzw nach der Empfangsantenne 3 sind radial in das Innere der Förderleitung 1 ragend in der Polarisationsebene der eingekoppelten Mikrowellen liegende Feldstäbe 4 und 5 angeordnet. Die Feldstäbe 4, 5 weisen zueinander einen Abstand Fₐ von 700 mm bzw. jeweils zur Sendeantenne 2 bzw. Empfangsantenne 3 einen Abstand A, B von 200 mm auf Sie sind zur Sende- und Empfangsantenne 2, 3 in Längsrichtung der Förderleitung 1 fluchtend angeordnet. Sie besitzen eine Länge von 140 mm. Die Feldstäbe 4, 5 bestehen aus abrasionsbeständigem Rundstahl mit einem Durchmesservon 4 mm. Das durch die vorstehend beschriebene Anordnung der Feldstäbe 4, 5 im Abschnitt der Förderleitung 1 entstehende System wirkt für Mikrowellen der Hohlleiter-Grundwelle als Resonator. Dadurch wird erreicht, dass von der Sendeantenne 2 in die Förderleitung eingekoppelte Mikrowellen, die außerhalb der Messstrecke S durch Beugung, Reflexion und/oder Überlagerung in ihrer Polarisationsebene und/oder Phasenlage Veränderungen erfahren haben, kurzgeschlossen werden, d. h. nicht zur Empfangsantenne 3 gelangen und das Messergebniss beeinflussen können. Reflektierte bzw. überlagerte Mikrowellen, deren elektrische Feldstärke am Ort der Feldstäbe null ist, werden jedoch durch die vorstehend beschriebene Messanordnung nicht kurzgeschlossen und können so zu einer Verfälschung des Messergebnisses führen.

Um dies zu vermeiden, sind vor und nach dem durch die Feldstäbe 4, 5 eingegrenzten Förderleitungsabschnitt 1 ebenfalls radial in das Innere der Förderleitung ragende Hilfsfeldstäbe 6, 7 angeordnet. Die Hilfsfeldstäbe 6, 7 liegen ebenfalls in der Polarisationsebene der eingekoppelten Mikrowellen. Die Hilfisfeldstäbe 6, 7 sind in Längsrichtung der Förderleitung 1 in einem Abstand F_{b}, F_{c} von 175 mm zu den Feldstäben 4, 5 angeordnet. Ihre Länge beträgt wie die der Feldstäbe 4, 5 140 mm.

Des Weiteren ist in Längsrichtung etwa mittig innerhalb der Messstrecke S ein um ca 90 ° innerhalb der Querschnittsfläche gegenüber den Feldstäben und damit der Polarisationsebene der eingekoppelten Mikrowellen verdrehter Hilfisfeldstab 8 angeordnet. Dieser Hilfsfeldstab 8 soll Resonanzeffekte von in der Polarisationsebene gegenüber den eingekoppelten Mikrowellen um 90 ° verdrehten reflektierten Mikrowellen innerhalb des von den Feldstäben 4, 5 und dem Förderleitungsabschnitt 1 gebildeten Resonators verhindern.

## Patentansprüche

1. M ikrowellen-Messeinrichtung zur Bestimmung der Beladung einer Zweiphasenströmung mit gasförmigem Trägermedium mit kleinen und kleinsten Feststoff- und/oder Flüssigkeitspartikeln sowie zur Bestimmung des in einer Flüssigkeitsströmung enthaltenen Gases, eine Sende- und eine Empfangsantenne aufweisend, die in Längsrichtung eines das Zweiphasengemisch führenden Förderleitungsabschnittes aus elektrisch leitfähigem Material, beabstandet zueinander, eine Messstrecke bildend angeordnet sind,
**dadurch gekennzeichnet,**
**dass** in Längsrichtung vor und nach der zwischen Sende- und Empfangsantenne (2,3) liegenden Messstrecke (S), fluchtend zu dieser, in das Innere der aus elektrisch leitfähigem Material bestehenden Förderleitung (1) ragende Stäbe (4,5) aus elektrisch leitfähigem Material (im Folgenden Feldstäbe genannt) so angeordnet sind, dass die Feldstäbe (4,5) und der in Längsrichtung der Förderleitung (1) zwischen diesen liegende Förderleitungsabschnitt (Fₐ) aus elektrisch leitfähigem Material als Resonator für eingekoppelte Mikrowellen wirken.

2. Mikrowellen-Messeinrichtung nach Anspruch 1,
**dadurch gekennzeichnet,**
**dass** die Feldstäbe (4,5) annähernd innerhalb der Querschnittsfläche des Förderleitungsabschnittes (Fₐ) liegen und gleich oder entgegengesetzt gerichtet sind.

3. Mikrowellen-Messeinrichtung nach Anspruch 1 oder 2,
**dadurch gekennzeichnet,**
**dass** die Feldstäbe (4,5) etwa radial zum Mittelpunkt der Querschnittsfläche des Förderleitungsabschnittes (Fₐ) weisend bzw diesen kreuzend angeordnet sind.

4. Mikrowellen-Messeinrichtung nach einem dervorgenannten Ansprüche,
**dadurch gekennzeichnet,**
**dass** die in das Innere der Förderleitung (1) ragenden Feldstäbe (4,5) die Querschnittsfläche des Förderleitungsabschnittes (Fₐ) mindestens zur Hälfte, bevorzugt zu mehr als zwei Dritteln, durchspannen.

5. Mikrowellen-Messeinrichtung nach einem der vorgenannten Ansprüche,
**dadurch gekennzeichnet,**
**dass** vor und nach dem durch die Feldstäbe (4,5) eingegrenzten Förderleitungsabschnitt (Fₐ) Hilfsfeldstäbe (6,7) angeordnet sind.

6. Mikrowellen-Messeinrichtung nach Anspruch 5,
**dadurch gekennzeichnet,**
**dass** die Hilfsfeldstäbe (6,7) parallel zu den Feidstäben (4,5) in Richtung der Feldstäbe (4,5) oder entgegengestzt gerichtet angeordnet sind.

7. Mikrowellen-Messeinrichtung nach Anspruch 5 oder 6,
**dadurch gekennzeichnet,**
**dass** die Hilfsfeldstäbe (6,7) zu den Feldstäben (4,5) in einem Abstand (F_{b}, F_{c}) von ca. einem Achtel der Wellenlänge der Resonanzfrequenz des von den Feldstäben (4,5) und dem Förderleitungsabschnitt (Fₐ) gebildeten Resonators angeordnet sind.

8. Mikrowellen-Messeinrichtung nach einem der Ansprüche 5 bis 7,
**dadurch gekennzeichnet,**
**dass** die Länge der Hilfsfeldstäbe (6,7) der Länge der Feldstäbe (4,5) entspricht.

9. Mikrowellen-Messeinrichtung nach einem der vorgenannten Ansprüche,
**dadurch gekennzeichnet,**
**dass** etwa mittig zwischen Sende- und Empfangsantenne (2,3) um ca. 90° innerhalb der Querschnittsfläche des Förderleitungsabschnittes (1), gegenüber den Feldstäben (4,5) verdreht, ein Hilfsfeldstab (8) angeordnet ist.

10. Mikrowellen-Messeinrichtung nach einem der vorgenannten Ansprüche,
**dadurch gekennzeichnet,**
**dass** anstelle eines Feldstabes (4,5) innerhalb der jeweiligen Querschnittsfläche des Förderleitungsabschnittes (Fₐ) zwei oder mehrere Feldstäbe parallel zueinander angeordnet sind.

11. Mikrowellen-Messeinrichtung nach Anspruch 1 zur Bestimmung der Beladung mittels Hohlleiter-Grundwelle,
**dadurch gekennzeichnet,**
**dass** die zwischen Sende- und Empfangsantenne (2,3) liegende Messstrecke (S) dem 0,8 bis 3 fachen, bevorzugt dem 1,5 fachen des mittleren Durchmessers (D) des Förderleitungsabschnittes (Fₐ) entspricht.

12. Mikrowellen-Messeinrichtung nach Anspruch 11,
**dadurch gekennzeichnet,**
**dass** der jeweilige Abstand (A,B) zwischen Feldstab (4) und Sendeantenne (2) bzw. Empfangsantenne (3) und Feldstab (5) ca. dem mittleren Durchmesser (D) des Förderleitungsabschnittes (Fₐ) entspricht.

13. Mikrowellen-Messeinrichtung nach Anspruch 5 und 11 oder 12 zur Bestimmung der Beladung mittels Hohlleiter-Grundwelle,
**dadurch gekennzeichnet,**
**dass** der Abstand (F_{b}, F_{c}) zwischen den Hilfsfeldstäben (6,7) und den Feldstäben (4,5) ca. 7/8 des mittleren Durchmessers (D) des Förderleitungsabschnittes (Fₐ) entspricht.

## Claims

1. A microwave measuring device for defining the load of a two-phase flow with a gaseous carrier medium with small and minute solids and or liquid particles as well as for defining the gas contained in a fluid flow, provided with a transmitting and a receiving antenna arranged, in longitudinal direction of a feed duct system of electrically conductive material conducting the two-phase mixture, at a distance from each other to form a measuring path,
**characterised by** the fact
that in longitudinal ahead of and behind the measuring path (S) in alignment therewith rods (4,5) of electrically conductive material (which below are called "field rods" ) are arranged into the interior of the feed duct (1) consisting of electrically conductive material such that the field rods (4,5) and the feed duct section (Fa) of electrically conductive material disposed between them in the longitudinal direction of the feed duct (1) act as a resonator for injected microwaves.

2. The microwave measuring device in accordance with claim 1, **characterised by** the fact that, the field rods (4,5) are disposed approximately within the cross-sectional surface of the feed duct section (Fa) and are disposed identically or oppositely.

3. The microwave measuring device in accordance with claim 1 or 2, **characterised by** the fact, that are arranged to point approximately to the center of the cross-sectional surface of the feed duct section (Fa) or to intersect it.

4. The microwave measuring device in accordance with one of the predicting claims, **characterised by** the fact that the field rods (4,5) extending into the interior of the feed duct (1) extend over at least half and preferably more than two-thirds across the cross-sectional surface of the feed duct section (Fa).

5. The microwave measuring device in accordance with one of the preceding claims, **characterised by** the fact that auxiliary field rods (6,7) are arranged ahead of and behind the feed duct section (Fa) limited by the field rods (4,5).

6. The microwave measuring device in accordance with claim 5, **characterised by** the fact that the auxiliary field rods (6,7) are arranged parallel to the field rods (4,5) and in the direction thereof, or opposite thereto.

7. The microwave measuring device in accordance with claim 5 or 6, **characterised by** the fact that the auxiliary field rods (6,7) are arranged relative to the field rods (4,5) at a distance (Fb,Fc) of about one eighth of the wavelength of the resonance frequency of the resonator (formed by the field rods (4,5) and the feed duct section (Fa).

8. The microwave measuring device in accordance with one of claims 5 to 7, **characterised by** the fact that the length of the auxiliary field rods (6,7) corresponds to the length of the field rods (4,5).

9. The microwave measuring device in accordance with one of the preceding claims, **characterised by** the fact that approximately in the middle between transmitting and receiving antenna (2,3) an auxiliary field rod ((8) is arranged in the cross-sectional surface of the feed duct section (1) rotated about 90° relative to the field rods (4,5).

10. The microwave measuring device in accordance with one of the preceding claims, **characterised by** the fact that instead of one field rod (4,5) in the given cross-sectional surface of the feed duct section (Fa) two or more field rods are arranged parallel to each other.

11. The microwave measuring device in accordance with claim 1, **characterised by** the fact that the measuring path (S) disposed between transmitting and receiving antenna (2,3) corresponds to .8 to 3 times, preferably 1.5 times, the mean diameter (D) of the feed duct section (Fa).

12. The microwave measuring device according to claim 11, **characterised by** the fact that the given distance (A,B) between field rod (4) and transmitting antenna (2) or receiving antenna (3) and field rod (5) corresponds to about the mean diameter (D) of the feed duct section (Fa).

13. The microwave measuring device according to claim 5 and 11 or 12 for defining the load by means of a waveguide fundamental wave, **characterised by** the fact that the distance (Fb,Fc) between the auxiliary field rods (6,7) and the field rods (4,5) corresponds to the mean diameter (D) of the feed duct section (Fa).

## Revendications

1. Dispositif de mesure à micro-ondes pour la détermination de la charge d'un écoulement diphasique avec milieu de support gazeux en particules solides et/ou liquides petites et très petites ainsi que pour la détermination du gaz contenu dans un écoulement de liquide, présentant une antenne d'émission et une antenne de réception qui sont disposées à distance l'une de l'autre en direction longitudinale d'une section de tuyauterie de transport conduisant le mélange diphasique en matériau électroconducteur, formant une section de mesure,
**caractérisé par le fait**
**que** des barres (4, 5) en matériau électroconducteur (appelées dans la suite barres de champ) sont disposées, en direction longitudinale, avant et après la section de mesure (S) située entre les antennes d'émission et de réception (2, 3), en alignement avec celles-ci, faisant saillie à l'intérieur de la tuyauterie de transport (1) en matériau électroconducteur, de telle manière que les barres de champ (4, 5) et la section de tuyauterie de transport (Fₐ) en matériau électroconducteur située entre celles-ci en direction longitudinale de la tuyauterie de transport (1) agissent comme un résonateur pour les micro-ondes injectées.

2. Dispositif de mesure à micro-ondes selon la revendication 1,
**caractérisé par le fait**
**que** les barres de champ (4, 5) sont situées approximativement à l'intérieur de la surface de section de la section de tuyauterie de transport (Fₐ) et sont soit de même direction, soit de directions opposées.

3. Dispositif de mesure à micro-ondes selon la revendication 1 ou 2,
**caractérisé par le fait**
**que** les barres de champ (4, 5) sont disposées de manière à être dirigées à peu près radialement vers le centre de la surface de section de la section de tuyauterie de transport (Fₐ) ou à croiser celui-ci.

4. Dispositif de mesure à micro-ondes selon l'une des revendications précédentes,
**caractérisé par le fait**
**que** les barres de champ (4, 5) faisant saillie à l'intérieur de la tuyauterie de transport (1) pénètrent d'au moins la moitié, de préférence de plus des deux tiers dans la surface de section de la section de tuyauterie de transport (Fₐ).

5. Dispositif de mesure à micro-ondes selon l'une des revendications précédentes,
**caractérisé par le fait**
**que** des barres de champ auxiliaires (6, 7) sont disposées avant et après la section de tuyauterie de transport (Fₐ) délimitée par les barres de champ (4, 5).

6. Dispositif de mesure à micro-ondes selon la revendication 5,
**caractérisé par le fait**
**que** les barres de champ auxiliaires (6, 7) sont disposées parallèlement aux barres de champ (4, 5) en direction des barres de champ (4, 5) ou dans une direction opposée.

7. Dispositif de mesure à micro-ondes selon la revendication 5 ou 6,
**caractérisé par le fait**
**que** les barres de champ auxiliaires (6, 7) sont disposées à une distance (F_{b}, F_{c}) d'environ un huitième de la longueur d'onde de la fréquence de résonance du résonateur formé par les barres de champ (4, 5) et la section de tuyauterie de transport (Fₐ) par rapport aux barres de champ (4, 5).

8. Dispositif de mesure à micro-ondes selon l'une des revendications 5 à 7,
**caractérisé par le fait**
**que** la longueur des barres de champ auxiliaires (6, 7) correspond à la longueur des barres de champ (4, 5).

9. Dispositif de mesure à micro-ondes selon l'une des revendications précédentes,
**caractérisé par le fait**
**qu'**une barre de champ auxiliaire (8), tournée d'environ 90° à l'intérieur de la surface de section de la section de tuyauterie de transport (Fₐ) par rapport aux barres de champ (4, 5), est à peu près centrée entre les antennes d'émission et de réception (2, 3).

10. Dispositif de mesure à micro-ondes selon l'une des revendications précédentes,
**caractérisé par le fait**
**que** deux ou plusieurs barres de champ parallèles entre elles sont disposées à la place d'une barre de champ (4, 5) à l'intérieur de la surface de section de la section de tuyauterie de transport (Fₐ).

11. Dispositif de mesure à micro-ondes selon la revendication 1 pour la détermination de la charge au moyen de l'onde fondamentale de guide d'ondes,
**caractérisé par le fait**
**que** la section de mesure (S) située entre les antennes d'émission et de réception (2, 3) correspond à 0,8 à 3 fois, de préférence à 1,5 fois le diamètre moyen (D) de la section de tuyauterie de transport (Fₐ).

12. Dispositif de mesure à micro-ondes selon la revendication 11,
**caractérisé par le fait**
**que** la distance respective (A, B) entre barre de champ (4) et antenne d'émission (2) ou antenne de réception (3) et barre de champ (5) correspond au diamètre moyen (D) de la section de tuyauterie de transport (Fₐ).

13. Dispositif de mesure à micro-ondes selon les revendications 5 et 11 ou 12 pour la détermination de la charge au moyen de l'onde fondamentale de guide d'ondes,
**caractérisé par le fait**
**que** la distance (F_{b}, F_{c}) entre les barres de champ auxiliaires (6, 7) et les barres de champ (4, 5) correspond approximativement aux 7/8 du diamètre moyen (D) de la section de tuyauterie de transport (Fₐ).
